# EUROPÄISCHE PATENTSCHRIFT

(11) **EP 3 524 364 B1**
(45) Veröffentlichungstag und Bekanntmachung des Hinweises auf die Patenterteilung: **10.12.2025**
(21) Anmeldenummer: 18185435.7
(22) Anmeldetag: 25.07.2018
(51) Int. Cl.: B08B 9/20, G01N 21/88, G01N 21/94

(54) **VERFAHREN ZUM KONTROLLIEREN VON FLASCHENZELLEN UND FLASCHENREINIGUNGSMASCHINE**
METHOD FOR CONTROLLING BOTTLE CELLS AND BOTTLE WASHING MACHINE
PROCÉDÉ DE CONTRÔLE DE CELLULES À BOUTEILLES ET MACHINE DE NETTOYAGE DE BOUTEILLES

(30) Priorität: 08.02.2018 DE 102018201957
(43) Veröffentlichungstag der Anmeldung: 14.08.2019
(73) Patentinhaber: Krones AG, 93073 Neutraubling (DE)
(72) Erfinder: Keppler, Michael, 93073 Neutraubling (DE); Eberhardt, Melf, 93073 Neutraubling (DE)
(74) Vertreter: Grünecker Patent- und Rechtsanwälte PartG mbB

(56) Entgegenhaltungen:
- DE-A1- 19 509 631
- DE-A1- 2 248 220
- DE-C1- 4 237 207
- DE-U1- 8 710 708
- JP-A- 2017 173 166

## Beschreibung

Die Erfindung betrifft ein Verfahren zum Kontrollieren von Flaschenzellen und eine Flaschenreinigungsmaschine.

Flaschenreinigungsmaschinen, wie beispielsweise bekannt aus DE 87 10 708 U1, weisen bekanntermaßen eine Vielzahl von Flaschenzellen zur Aufnahme zu reinigender Flaschen oder dergleichen Behälter auf. Die Flaschenzellen sitzen auf Querträgern, auch Flaschenträger genannt, die von endlosen Ketten kontinuierlich durch mehrere Behandlungszonen der Flaschenreinigungsmaschinen transportiert werden. Die Flaschen werden hierzu mit ihren Mündungen voraus in die Flaschenzellen geschoben.

Die Flaschenzelle oder auch nur die Mündungsaufnahmen sind in der Regel aus Kunststoff gefertigt mit einem fachwerkartigen Aufbau, der sowohl ein Ablaufen von Reinigungsflüssigkeit ermöglicht als auch einer elastische Spreizung zum formschlüssigen Einklemmen der Flaschenmündungen dienen kann.

Aufgrund ständiger mechanischer Belastung im Reinigungsbetrieb, insbesondere bei der Zufuhr der Flaschen, können Segmente der Mündungsaufnahmen abbrechen und/oder unzulässig verformt werden. Außerdem können sich Flaschen und/oder Flaschenbestandteile in den Flaschenzellen verkeilen. Dies kann die Haltefunktion der betroffenen Flaschenzelle unzulässig beeinträchtigen und/oder zu einer weitergehenden Beschädigung der Flaschenzelle bei darauffolgender Flaschenzufuhr führen.

Zur Reduzierung derartiger Fehlfunktionen sind daher sowohl mechanisch abtastende Kontrollvorrichtungen für Flaschenzellen bekannt als auch optische Kontrollverfahren wie beispielsweise aus der DE 87 10 708 U1 mit einer einzelnen Reflexionslichtschranke. Es hat sich jedoch als problematisch erwiesen, fehlerhafte Flaschenzellen auf diese Weise zuverlässig zu erkennen. Beispielsweise kann nicht ausreichend zwischen unterschiedlichen Beschädigungen und in den Flaschenzellen eingeklemmten Flaschen oder Scherben unterschieden werden. Folglich kommt es sowohl zu falsch positiven als auch zu falsch negativen Kontrollergebnissen mit entsprechender Beeinträchtigung des laufenden Reinigungsbetriebs.

Die JP 6613187 B2 beschreibt zudem ein Verfahren zum Kontrollieren von Flaschenzellen in einer Flaschenreinigungsmaschine, bei dem die Flaschenzellen beispielsweise in Gruppen zu je vier Flaschenzellen von einer Kamera abgebildet werden und die zugehörigen Bilddaten in einer Recheneinheit mit Referenzbildern von Flaschenzellen ohne Fremdkörper verglichen werden. Hierfür werden die Flaschenzellen jeweils doppelt an zwei unterschiedlichen Positionen und mit zeitlichem Versatz abgebildet, so dass beispielsweise Wassertropfen, die im ersten Bild vorhanden sind und falsch positiv als Fremdkörper detektiert werden könnten, im zweiten Bild wahrscheinlich bereits heruntergefallen sind. Durch Vergleich der beiden Bilder lässt sich dann auf eine falsch positive Detektion und eine letztendlich ordnungsgemäße Flaschenzelle schließen. Die Flaschenzellen werden hierfür flaschenbodenseitig abgebildet und bei Detektion einer fehlerhaften Flaschenzelle im Bereich des Flaschenauslaufs durch entsprechende Steuerung des Flaschenzellentransports angehalten. Die defekte Flaschenzelle kann dort im Stillstand des Transportmechanismus von Personal gereinigt werden. Anschließend wird der Transportmechanismus wieder in Bewegung gesetzt, so dass die entsprechend gereinigten Flaschenzellen am Flascheneinlauf wieder Flaschen aufnehmen können.

Es besteht daher Bedarf für diesbezüglich verbesserte Kontrollverfahren und Flaschenreinigungsmaschinen.

Die gestellte Aufgabe wird mit dem Verfahren nach Anspruch 1 gelöst. Demnach dient dieses zum Kontrollieren von Flaschenzellen in einer Flaschenreinigungsmaschine. Die Flaschenzellen werden darin flaschenmündungsseitig auf optischem Wege inspiziert.

Hierfür bildet man die Flaschenzellen ab und überprüft daraus resultierende Bilddaten durch digitalen Vergleich in einer Bildauswerteeinheit mit Referenzdaten ordnungsgemäßer und/oder leerer Flaschenzellen auf das Vorliegen wenigstens eines Fehlerzustands. Ferner werden die Flaschenzellen darauf basierend als fehlerhaft oder ordnungsgemäß beurteilt und diesbezüglich fehlerhafte Flaschenzellen von der Flaschenzufuhr ausgenommen.

Vorzugsweise werden dann Querreihen von Flaschenzellen mit wenigstens einer fehlerhaften Flaschenzelle, bzw. zugehörige Querträger, von der Flaschenzufuhr ausgenommen.

Die Flaschenzellen werden im Auflicht mit wenigstens einer insbesondere digitalen Kamera abgebildet. Hierbei wird wenigstens eine stirnseitige Ansicht einer an der Flaschenzelle ausgebildeten segmentierten Mündungsaufnahme für Mündungsbereiche von Flaschen erstellt.

Die Bilddaten werden durch Bildauswertung auf charakteristische Muster, definierte Hell-Dunkel-Übergänge oder dergleichen untersucht, um stirnseitige Segmente der Mündungsaufnahmen zu erkennen und/oder einzugrenzen und schließlich deren Größe und/oder Lage im Bildbereich zu bestimmen. Ebenso können Helligkeitswerte im Bereich eines zentralen Mündungskanals für die Flaschenmündung bestimmt werden, um dort vorhandene Glassplitter oder dergleichen Fremdkörper zu erkennen.

Die Referenzdaten sind charakteristische Muster, definierte Hell-Dunkel-Übergänge, Bildkoordinaten ordnungsgemäßer Flaschenzellen oder dergleichen. Weicht beispielsweise ein lokalisiertes stirnseitiges Segment der Mündungsaufnahme hinsichtlich Größe und/oder Lage und/oder durch Nichtvorhandensein von einem definierten Sollzustand über eine festgelegte Toleranzschwelle hinaus ab, so liegt ein Fehlerzustand vor.

Ordnungsgemäße Flaschenzellen sind solche ohne bestehende oder unmittelbar drohende Funktionseinschränkung aufgrund von Beschädigungen und/oder eingeklemmten Scherben oder dergleichen Fremdkörper.

Fehlerhafte Flaschenzellen weisen wenigstens einen Fehlerzustand auf. Durch Überprüfung auf unterschiedliche Fehlerzustände kann die Fehlerhaftigkeit einer Flaschenzelle besonders zuverlässig ermittelt werden, ebenso die Art und das Ausmaß des/der Fehler.

Durch die Abbildung und zugehörige Datenauswertung können somit unterschiedliche Beschädigungen der Flaschenzellen identifiziert und gegebenenfalls hinsichtlich ihres Schweregrads beurteilt werden. Ebenso können fehlerhaft in der Flaschenzelle vorhandene Flaschen oder Scherben identifiziert und von Beschädigungen der Mündungsaufnahmen unterschieden werden.

Somit kann zuverlässig entschieden werden, ob die Flaschenzufuhr zu einer kontrollierten Flaschenzelle und/oder zum zugehörigen Querträger zu unterbinden ist. Ein Auslassen des Querträgers insgesamt ist vorteilhaft, da in der Regel alle Flaschen einer Querreihe gemeinsam eingeschoben werden. Einzelne Flaschenzellen ließen sich daher nur mit vergleichsweise großem Aufwand vom Flascheneinschub ausnehmen. Prinzipiell ist ein individuelles Unterbinden der Flaschenzufuhr zu einzelnen Flaschenzellen jedoch nicht auszuschließen.

Das beschriebene Verfahren ist für Mündungsaufnahmen bzw. Mündungseinsätze aus Kunststoff besonders vorteilhaft, da deren segmentierter Aufbau zwangsläufig nur begrenzt widerstandsfähig gegenüber mechanischen Beanspruchungen ist, beispielsweise beim Verklemmen von Flaschen, Scherben oder dergleichen. Die Flaschenzellen können auch vollständig aus Kunststoff bestehen.

Vorzugsweise wird ein stirnseitiger Flächeninhalt der abgebildeten Flaschenzellen berechnet und, insbesondere zur Ermittlung eines ersten Fehlerzustands, mit einem Sollflächeninhalt verglichen. Damit lässt sich insbesondere feststellen, ob ein Segment der Mündungsaufnahme abgebrochen ist.

Vorzugsweise wird eine stirnseitige Kontur der abgebildeten Flaschenzellen berechnet und, insbesondere zur Ermittlung eines zweiten Fehlerzustands, mit einer Sollkontur verglichen. Damit lässt sich insbesondere feststellen, ob ein Segment der Mündungsaufnahme verformt ist, also beispielsweise nach außen absteht oder nach innen in den von den Segmenten umgebenen Mündungskanal ragt. Die Kontur umfasst beispielsweise stirnseitige Begrenzungslinien um die Segmente der Mündungsaufnahme.

Vorzugsweise wird eine Verteilung von Helligkeitswerten im Bereich eines Mündungskanals der abgebildeten Flaschenzellen ermittelt und, insbesondere zur Ermittlung eines dritten Fehlerzustands, mit einer Sollverteilung verglichen. Beispielsweise wird überprüft, ob mehr als eine zulässige Maximalanzahl von Bildpunkten heller als ein vorgegebener Schwellenwert sind. Der Mündungskanal ist ein von den Segmenten umgebener zentraler Bereich für die Flaschenmündung und im ordnungsgemäßen Zustand leer. Der Mündungskanal wird dann im Auflicht als vergleichsweise dunkler Bildbereich dargestellt. Befinden sich im Mündungskanal jedoch Glassplitter oder dergleichen Fremdkörper, wird daran Auflicht reflektiert und/oder zurückgestreut und als vergleichsweise heller Bildbereich dargestellt.

Vorzugsweise werden die Flaschenzellen im laufenden Betrieb der Flaschenreinigungsmaschine kontrolliert. Dies ermöglicht eine umgehende Sperrung fehlerhafter Flaschenzellen bzw. Querträger und minimiert fehlerbedingte Produktionsunterbrechungen.

Beim erfindungsgemäßen Verfahren werden als fehlerhaft erkannte Flaschenzellen und/oder zugehörige Querträger elektronisch markiert und für die Flaschenzufuhr gesperrt. Damit werden diese zuverlässig vom weiteren Flascheneinschub ausgenommen, beispielsweise bis zur Fehlerbeseitigung.

Die Flaschenzellen laufen in parallel geschalteten Transportspuren durch die Flaschenreinigungsmaschine. Vorzugsweise nimmt man nach Kontrolle einer vorgegebene Anzahl von Flaschenzellen und, insbesondere aller Flaschenzellen, einer bestimmten Transportspur einen Spurwechsel zur Kontrolle von Flaschenzellen einer anderen Transportspur vor. Dies ermöglicht ein effizientes und im Produktionsbetrieb laufend wiederholbares Prüfraster für alle Flaschenzellen der Flaschenreinigungsmaschine mittels quer zu den Transportspuren fahrbarer Kameras.

Die gestellte Aufgabe wird ebenso mit einer Flaschenreinigungsmaschine nach Anspruch 7 löst. Demnach umfasst diese eine optische Kontrollvorrichtung für Flaschenzellen sowie erfindungsgemäß ferner wenigstens eine Kamera zum flaschenmündungsseitigen Abbilden der Flaschenzellen, eine digitale Bildauswerteeinheit zum Vergleich daraus resultierender Bilddaten mit Referenzdaten ordnungsgemäßer und/oder leerer Flaschenzellen und zur darauf basierenden Ermittlung wenigstens eines Fehlerzustands der Flaschenzellen, und eine Steuerung zum Unterbinden der Flaschenzufuhr zu Flaschenzellen mit wenigstens einem Fehlerzustand. Damit lassen sich die zum Verfahren beschriebenen Vorteile erzielen.

Vorzugsweise ist die Bildauswerteeinheit zum Ausführen von wenigstens einem Berechnungsschritt gemäß der voranstehend beschriebenen Ausführungsformen des Verfahrens ausgebildet.

Bei der erfindungsgemäßen Flaschenreinigungsmaschine ist die Kontrollvorrichtung ferner zur elektronischen Markierung fehlerhafter Flaschenzellen und/oder jeweils zugehöriger Querträger für die Steuerung ausgebildet. Dies ermöglicht ein dauerhaftes Unterbinden des Flascheneinschubs in die betroffenen Flaschenzellen / Querträger im nachfolgenden Arbeitsbetrieb bzw. bis zur Fehlerbeseitigung.

Aufgrund der elektronischen Markierung gibt die Steuereinheit vorzugsweise einen Maschinenbefehl aus, der verhindert, dass bereitstehende Flaschen von Einschubfingern in einen Querträger mit eine fehlerhaften Flaschenzelle geschoben werden. Eine Sperrung des gesamten Querträgers ist antriebstechnisch einfacher zu bewerkstelligen als eine Sperrung einzelner Flaschenzellen.

Vorzugsweise umfasst die Flaschenreinigungsmaschine ferner ein endloses Transportmittel für die Flaschenzellen, wobei die Kamera im Bereich einer Rücktrums des Transportmittels angeordnet ist, insbesondere unterhalb einer Nachbehandlungszone der Flaschenreinigungsmaschine. Das Transportmittel umfasst beispielsweise zwei seitliche Ketten, in denen die Querträger eingehängt sind. Das Rücktrum dient dem Rücktransport leerer Flaschenzellen zum Flascheneinschub. Die Flaschenzellen werden am Rücktrum für vergleichsweise lange Zeit mit nach oben weisenden Mündungsaufnahmen transportiert und sind somit für eine bildgebende Kontrolle gut von oben her zugänglich. Unter der Nachbehandlungszone lässt sich der für die Kontrollvorrichtung nötige Raum unproblematisch bereitstellen.

Vorzugsweise ist die Kamera nach der Flaschenabgabe oberhalb der Flaschenzellen und/oder des Rücktrums angeordnet. Möglich ist auch Anordnung der Kamera neben den Flaschenzellen und/oder dem Rücktrum. Eine Verschmutzung der Kameraoptik und/oder eine schädliche Einwirkung herabtropfender Reinigungsflüssigkeit lassen sich dadurch weitgehend vermeiden.

Vorzugsweise ist die Kamera an einer Linearführung quer über Transportspuren für die Flaschenzellen motorisch verschiebbar. Damit kann die Kamera nacheinander im Bereich unterschiedlicher Transportspuren positioniert werden. Der zugehörige Stellmotor wird dann beispielsweise von der Steuerung gezielt aktiviert. Die Kameras könnten aber auch stationär befestigt und den Transportspuren fest zugeordnet sein.

Vorzugsweise sind mehrere Kameras zur Abbildung der Flaschenzellen vorhanden, und jeder Kamera sind dann vier bis zwölf Transportspuren zugeordnet. Damit lassen sich besonders praktikable Kontrollzyklen für die Flaschenzellen vorgeben. Beispielsweise wird dann jede Flaschenzelle nach vier bis zwölf Umläufen des Transportmittels erneut kontrolliert.

Vorzugsweise ist die Kontrollvorrichtung konfiguriert, Spurwechsel der wenigstens einen Kamera vorzunehmen, insbesondere nach jeweils vollständigem Umlauf des Transportmittels. Alle Flaschenzellen einer bestimmten Transportspur können dann während eines vollständigen Umlaufs kontrolliert werden. Nach dem Spurwechsel wird dies für eine andere Transportspur wiederholt. Die Anzahl der Spurwechsel für einen vollständigen Kontrollzyklus entspricht dann der Anzahl der Transportspuren pro Kamera.

Bevorzugte Ausführungsformen der Erfindung sind zeichnerisch dargestellt. Es zeigen:
- Fig. 1: eine schematische Seitenansicht der Flaschenreinigungsmaschine;
- Fig. 2: eine schematischen Draufsicht auf die Kontrollvorrichtung;
- Fig. 3A - 3F: eine schematische Darstellung von Bilddaten und Referenzdaten einer Flaschenzelle; und
- Fig. 4: eine schematische Seitenansicht einer alternativen Ausführungsform der Flaschenreinigungsmaschine.

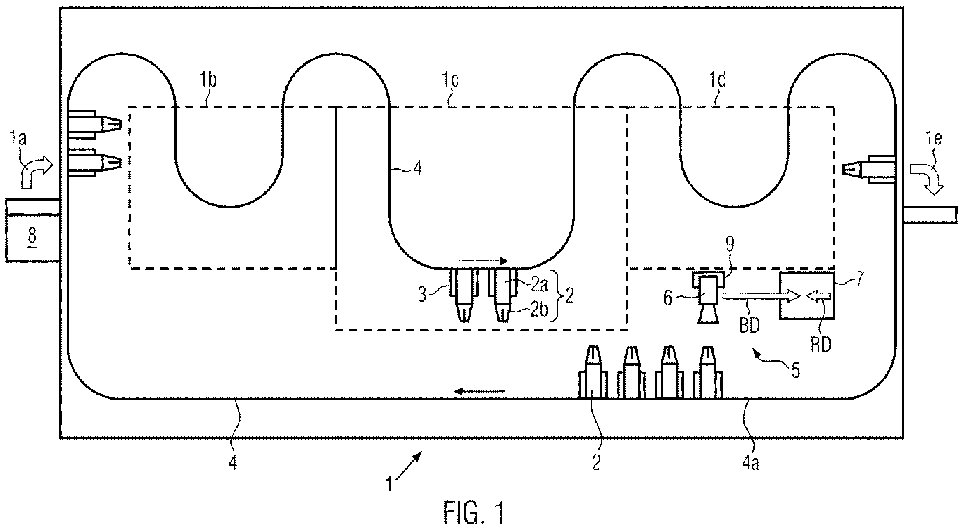

Wie die Figur 1 in stark schematisierter Darstellung zeigt, umfasst die Flaschenreinigungsmaschine 1 in bevorzugter Ausgestaltung eine Vielzahl von Flaschenzellen 2 (nur einige davon dargestellt), in denen zu reinigende Flaschen (nicht dargestellt) in bekannter Weise ausgehend von einem Flascheneinschub 1a durch mehrere Zonen 1b - 1d zur Vorbehandlung, Hauptbehandlung und Nachbehandlung bis zu einem Flaschenausschub 1e transportiert und dabei gereinigt werden.

Die Flaschenzellen 2 umfassen bekanntermaßen längliche Führungshülsen 2a und Mündungsaufnahmen 2b, die auch mit aktiven oder passiven Klemmen für die Flaschenmündungen ausgestattet sein können. Die Mündungsaufnahmen 2b bestehen beispielsweise aus einem Kunststoff und sind segmentiert und/oder fachwerkartig ausgebildet, um ein Ablaufen von Reinigungsmitteln zu begünstigen. Die Mündungsaufnahmen 2b sind vorzugsweise als austauschbare Einsätze für die Führungshülsen 2a ausgebildet. Die Flaschenzellen 2 können aber auch aus einem Stück gefertigt sein und dann vollständig aus Kunststoff bestehen.

Die Flaschenzellen 2 sitzen auf Querträgern 3, auch Flaschenträger genannt, die von einem endlosen Transportmittel 4 mit beispielsweise zwei seitlichen Transportketten kontinuierlich durch die Flaschenreinigungsmaschine 1 gefahren werden. Zwischen dem Flaschenausschub 1e und dem Flascheneinschub 1a umfasst das Transportmittel 4 ein Rücktrum 4a, in dessen Bereich eine optische Kontrollvorrichtung 5 für leer zurücklaufenden Flaschenzellen 2 angeordnet ist.

Die Kontrollvorrichtung 5 umfasst Kameras 6 zum flaschenmündungsseitigen Abbilden der Flaschenzellen 2, eine digitale Bildauswerteeinheit 7 zum Vergleich daraus resultierender Bilddaten BD mit gespeicherten Referenzdaten RD ordnungsgemäßer und/oder leerer Flaschenzellen 2 sowie eine Steuerung 8 zum gezielten Unterbinden des Flascheneinschubs in von der Bildauswerteeinheit 7 als fehlerhaft erkannte Flaschenzellen 2 und insbesondere des Flascheneinschubs in sämtliche Flaschenzellen 2 des jeweils betroffenen Querträgers 3.

Die Kameras 6 sind an einer Linearführung 9 vorzugsweise über dem Rücktrum 4a angeordnet. Die Flaschenzellen 2 laufen dann mit ihren Mündungsaufnahmen 2b durch die Bildbereiche der Kameras 6. Somit sind die Kameras 6 vor Verschmutzungen, ablaufendem Reinigungsmittel oder dergleichen weitgehend geschützt.

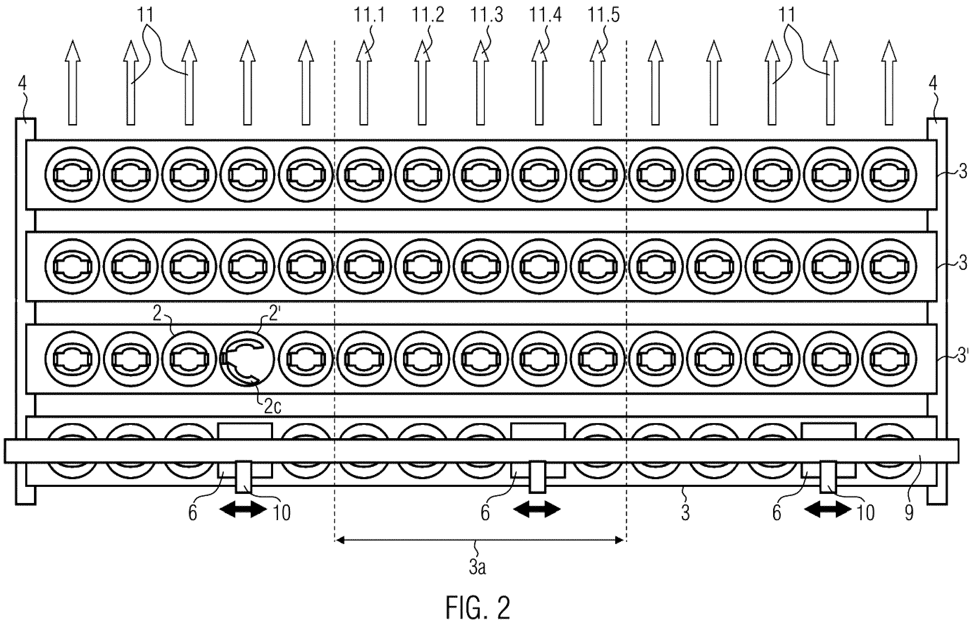

Wie die Fig. 2 erkennen lässt, können die Kameras 6 mittels Stellmotoren 10 an der Linearführung 9 quer zum Transportmittel 4 gefahren / verschoben werden. Die Kameras 6 lassen sich so gesteuert über einzelnen Transportspuren 11 für die Flaschenzellen 2 positionieren. Dies ist mittels Doppelpfeil für drei Kameras 6 angedeutet, denen beispielhaft jeweils fünf Transportspuren 11 zugeordnet sind. In der Praxis sind beispielsweise vier bis zwölf Transportspuren 11 pro Kamera 6 denkbar. Durch Aneinanderreihung mehrerer quer fahrbarer Kameras 6 lässt sich prinzipiell eine beliebige Anzahl von Transportspuren 11 wie beschrieben bildgebend kontrollieren.

Vorzugsweise werden Kontrollzyklen, die jeweils alle zu kontrollierenden Flaschenzellen 2 umfassen, im normalen Reinigungsbetrieb laufend wiederholt ausgeführt. Am Anfang eines solchen Kontrollzyklus werden vorzugsweise alle Flaschenzellen 2 einer bestimmten Transportspur 11 nacheinander abgebildet und per Bildauswertung kontrolliert. Danach wird ein Spurwechsel der zugeordneten Kamera 6 auf eine andere Transportspur 10 automatisch veranlasst. Dies wird für alle verbleibenden und der jeweiligen Kamera 6 zugeordneten Transportspuren 11 wiederholt. Die Kameras 6 werden entsprechend parallel betrieben. Am Ende des Kontrollzyklus sind alle in den zugeordneten Transportspuren 11 laufenden Flaschenzellen 2 einmal bildgebend von den Kameras 6 und der Bildauswerteeinheit 7 kontrolliert worden.

Im Beispiel der Fig. 2 würde die mittlere Kamera 6 alle in den Transportspuren 11.1 - 11.5 laufenden Flaschenzellen 2 in geeigneter Reihenfolge kontrollieren und somit einen Teilbereich 3a der Querträger 3 abdecken. Prinzipiell könnte aber auch für jede Transportspur 11 eine separate stationäre Kamera 6 vorhanden sein.

Die Bildaufnahme wird in geeignetem Auflicht vorzugsweise durch Näherungssensoren im Bereich der Kameras 6 ausgelöst, wenn eine zu kontrollierende Flaschenzelle 2 im Bildbereich der Kamera 6 ist.

In der Fig. 2 ist beispielhaft eine fehlerhafte Flaschenzelle 2' dargestellt, bei der ein Segment 2c der Mündungsaufnahme 2b unzulässig verformt ist und ein weiteres fehlt. Die fehlerhafte Flaschenzelle 2' wurde demnach von der zugehörigen Kamera 6 bereits abgebildet und wird von der Bildauswerteeinheit 7 beispielsweise hinsichtlich der nachfolgend beschriebenen Fehlerzustände untersucht und auf dieser Grundlage als fehlerhaft beurteilt. Demzufolge wird der zugehörige Querträger 3' von der Kontrollvorrichtung 5 elektronisch als fehlerhaft markiert und von der Steuerung 8 von der weiteren Flaschenzufuhr ausgeschlossen.

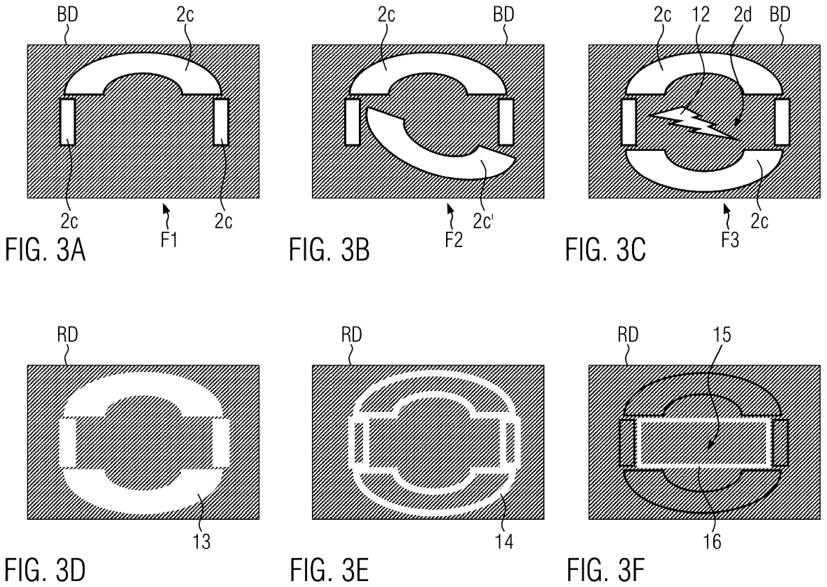

Die Fig. 3A - 3F verdeutlichen in schematischer Darstellung Varianten der Bildauswertung. Demnach werden die Flaschenzellen 2 flaschenmündungsseitig im Auflicht abgebildet, so dass sich stirnseitige Abschnitte der Mündungsaufnahmen 2b im Kamerabild prinzipiell hell gegenüber der Umgebung darstellen.

Die Fig. 3A - 3C verdeutlichen typische Bilddaten BD fehlerhafter Flaschenzellen 2'. Demnach fehlt in der Fig. 3A eines der Segmente 2c der Mündungsaufnahme 2b, entsprechend einem ersten Fehlerzustand F1. In der Fig. 3B ist ein Segment 2c' unzulässig verformt, entsprechend einem zweiten Fehlerzustand F2. In der Fig. 3C befindet sich ein Glassplitter 12 im Mündungskanal 2d der Mündungsaufnahme 2b, entsprechend einem dritten Fehlerzustand F3.

Die Fig. 3D - 3F verdeutlichen jeweils darunter zur Beurteilung der Fehlerzustände F1 - F3 besonders geeignete Referenzdaten RD ordnungsgemäßer Flaschenzellen 2.

Demnach können die Referenzdaten RD gemäß Fig. 3D einen (weiß gefüllten) Sollflächeninhalt 13 aller im ordnungsgemäßen Zustand vorhandenen Segmente 2c der Mündungsaufnahme 2b umfassen.

Unterschreitet ein aus den Bilddaten BD entsprechend berechneter Flächeninhalt aller vorhandener Segmente 2c den Sollflächeninhalt 13 um mehr als eine zugeordnete Toleranz, ordnet die Bildauswerteeinheit 7 der zugehörigen Flaschenzelle 2 einen ersten Fehlerzustand F1 zu, wie beispielsweise "abgebrochene Teile".

Überschreitet ein aus den Bilddaten BD entsprechend berechneter Flächeninhalt aller vorhandener Segmente 2c den Sollflächeninhalt 13 um mehr als eine diesbezügliche Toleranz, kann die Bildauswerteeinheit 7 der zugehörigen Flaschenzelle 2 auch einen dritten Fehlerzustand F3 zuordnen, wie beispielsweise "Fremdkörper vorhanden".

Die Referenzdaten RD können gemäß Fig. 3E eine (weiß dargestellte) Sollkontur 14 aller im ordnungsgemäßen Zustand vorhandenen Segmente 2c der Mündungsaufnahme 2b umfassen.

Unterscheidet sich eine aus den Bilddaten BD entsprechend berechnete stirnseitige Kontur vorhandener Segmente 2c von der Sollkontur 14 um mehr als einen zugeordneten Toleranzbereich, ordnet die Bildauswerteeinheit 7 der zugehörigen Flaschenzelle 2 einen zweiten Fehlerzustand F2 zu, wie beispielsweise "verformte Teile".

Die Referenzdaten RD können gemäß Fig. 3F eine Sollverteilung 15 von Helligkeitswerten in einem (weiß umrandeten) Bereich 16 des ordnungsgemäß leeren Mündungskanals 2d umfassen. Der leere Mündungskanal 2d stellt sich im Auflicht normalerweise dunkler dar als darin vorhandene Fremdkörper, wie beispielsweise Glassplitter 12. Die Bildauswerteeinheit 7 untersucht dann beispielsweise, ob eine Mindestanzahl von Bildpunkten im Bereich 16 über einem vorgegebenen Helligkeitsschwellenwert liegt, und/oder sie ermittelt im Bereich 16 die Größe einer Teilfläche mit Bildpunkten unterhalb eines bestimmten Helligkeitsschwellenwerts und überprüft dann, ob die berechnete Teilfläche eine Mindestgröße aufweist.

Unterscheidet sich schließlich eine aus den Bilddaten BD derart berechnete Verteilung von Helligkeitswerten im Bereich 16 von der Sollverteilung 15 um mehr als eine diesbezüglich vorgegebene Toleranz, ordnet die Bildauswerteeinheit 7 der zugehörigen Flaschenzelle 2 den dritten Fehlerzustand F3 zu, wie beispielsweise "Fremdkörper vorhanden".

Die Bildauswerteeinheit 7 stellt schließlich fest, ob/welche Fehlerzustände F1 - F3 vorliegen und schließt daraus, ob eine ordnungsgemäße Flaschenzelle 2 oder eine fehlerhafte Flaschenzelle 2' mit diesbezüglich unzulässiger Abweichung vorliegt. Für fehlerhafte Flaschenzellen 2' wird dann vorzugsweise der zugehörige Querträger 3' insgesamt elektronisch als fehlerhaft markiert und von der weiteren Flaschenzufuhr bis zur Fehlerbeseitigung wie beschrieben ausgeschlossen.

Durch Vergleich der Fehlerzustände F1 - F3 kann unter Berücksichtigung der verwendeten Referenzdaten RD beispielsweise unterschieden werden, ob ein Segment 2c unzulässig in den Mündungskanal 2d ragt, wie in Fig. 3B angedeutet ist, und/oder ob ein Glassplitter 12 oder dergleichen Fremdkörper im Mündungskanal 2d sitzt, wie in der Fig. 3C angedeutet ist.

Folglich können fehlerhafte Flaschenzellen 2' durch die Überprüfung auf unterschiedliche Fehlerzustände F1 - F3 besonders zuverlässig erkannt werden. Ebenso zuverlässig kann verhindert werden, dass ordnungsgemäße Flaschenzellen 2 irrtümlich als fehlerhaft beurteilt werden. Folglich können Beschädigungen der Flaschenreinigungsmaschine 1 wegen fehlerhafter Flaschenzellen 2' ebenso verhindert werden wie eine die Maschinenleistung verringernde unnötige Stilllegung von Transportspuren oder Querträgern 3 wegen irrtümlich als fehlerhaft beurteilter Flaschenzellen 2. Je nach Anwendungsfall und Bauweise der Flaschenzellen 2 ist prinzipiell aber auch eine bildgebende Kontrolle hinsichtlich lediglich eines einzelnen Fehlerzustands F1 - F3 denkbar.

Die beschriebene bildgebende Kontrolle lässt sich fortlaufend im normalen Arbeitsbetrieb der Flaschenreinigungsmaschine durchführen. Die Häufigkeit von alle Flaschenzellen 2 umfassenden Kontrollzyklen lässt sich durch die Anzahl der pro Kamera 6 zu kontrollierenden Transportspuren 11 flexibel anpassen.

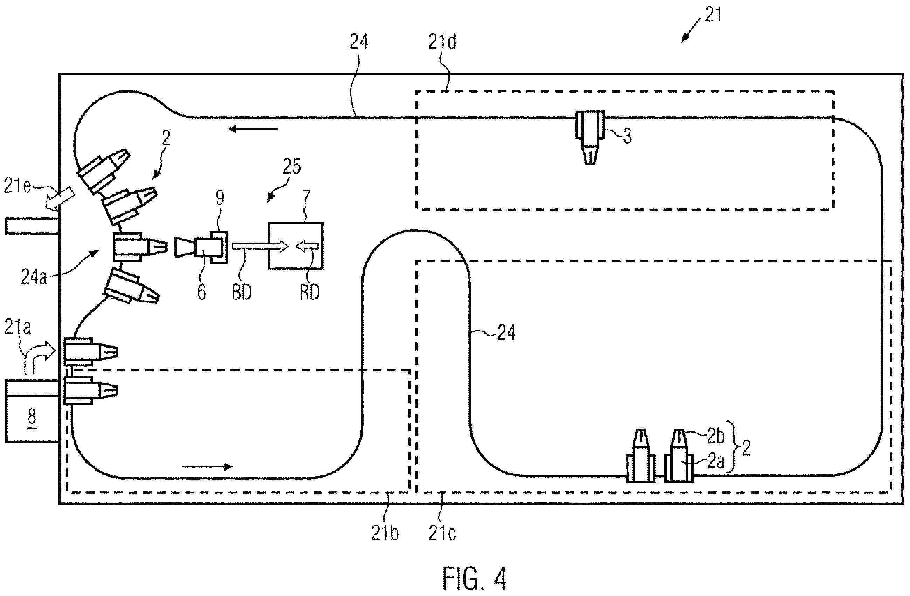

Die Fig. 4 zeigt schematisch eine Flaschenreinigungsmaschine 21 gemäß einer weiteren bevorzugten Ausgestaltung. Demnach ist diese als Einend-Maschine ausgebildet, also mit einem Flascheneinschub 21a und einem Flaschenausschub 21e auf derselben Maschinenseite. Demgegenüber ist die zuvor beschriebene Flaschenreinigungsmaschine 1 als Zweiend-Maschine ausgebildet, also mit einem Flascheneinschub 1a und Flaschenausschub 1e auf unterschiedlichen Maschinenseiten.

Folglich unterscheiden sich die Flaschenreinigungsmaschinen 1, 21 auch durch die räumliche Verteilung der jeweiligen Zonen 1b - 1d, 21b - 21d zur Vorbehandlung, Hauptbehandlung und Nachbehandlung sowie durch die Lage und Ausrichtung der Kontrollvorrichtungen 5, 25 für leer zurücklaufenden Flaschenzellen 2 am Rücktrum 4a, 24a des jeweiligen Transportmittels 4, 14.

Die Kameras 6 können demnach an einer Linearführung 9 auch seitlich des Rücktrums 24a angeordnet werden. Die Flaschenzellen 2 laufen dann ebenso mit den Mündungsaufnahmen 2b durch die Bildbereiche der Kameras 6. Somit sind die Kameras 6 auch bei der optischen Kontrollvorrichtung 25 vor Verschmutzungen und ablaufendem Reinigungsmittel geschützt.

Das zuvor bezüglich der Figuren 2 und 3A - 3F beschriebene Arbeitsprinzip lässt sich bei beiden optischen Kontrollvorrichtungen 5, 25 und Flaschenreinigungsmaschinen 1, 21 auf prinzipiell gleiche Weise und mit denselben Vorteilen anwenden. Entsprechend werden in der Fig. 1 und 4 diesbezüglich übereinstimmende Bezugszeichen verwendet, ohne an dieser Stelle nochmals auf die Funktionen der Kameras 6, der Bildauswerteeinheit 7, der Steuerung 8 und der Linearführung 9 einzugehen.

## Patentansprüche

1. Verfahren zum Kontrollieren von Flaschenzellen (2) in einer Flaschenreinigungsmaschine (1, 21), wobei die Flaschenzellen (2) flaschenmündungsseitig optisch inspiziert werden, und wobei man die Flaschenzellen (2) abbildet, durch digitalen Vergleich daraus resultierender Bilddaten (BD) mit Referenzdaten (RD) ordnungsgemäßer und/oder leerer Flaschenzellen (2) auf Vorliegen wenigstens eines Fehlerzustands (F1 - F3) überprüft, und daraufhin als fehlerhaft beurteilte Flaschenzellen (2') und/oder zugehörige Querträger (3') elektronisch markiert und von der weiteren Flaschenzufuhr ausnimmt.

2. Verfahren nach Anspruch 1, wobei ein stirnseitiger Flächeninhalt der abgebildeten Flaschenzellen (2) berechnet und, insbesondere zur Ermittlung eines ersten Fehlerzustands (F1), mit einem Sollflächeninhalt (13) verglichen wird.

3. Verfahren nach Anspruch 1 oder 2, wobei eine stirnseitige Kontur der abgebildeten Flaschenzellen (2) berechnet und, insbesondere zur Ermittlung eines zweiten Fehlerzustands (F2), mit einer Sollkontur (14) verglichen wird.

4. Verfahren nach Anspruch 1, 2 oder 3, wobei eine Verteilung von Helligkeitswerten in einem Bereich (16) eines Mündungskanals (2d) der abgebildeten Flaschenzellen (2) berechnet und, insbesondere zur Ermittlung eines dritten Fehlerzustands (F3), mit einer Sollverteilung (15) verglichen wird.

5. Verfahren nach wenigstens einem der vorigen Ansprüche, wobei die Flaschenzellen (2) im laufenden Arbeitsbetrieb der Flaschenreinigungsmaschine (1, 21) kontrolliert werden.

6. Verfahren nach wenigstens einem der vorigen Ansprüche, wobei die Flaschenzellen (2) in parallel geschalteten Transportspuren (11) durch die Flaschenreinigungsmaschine (1, 21) laufen, und wobei nach Kontrolle einer vorgegebene Anzahl von Flaschenzellen (2) und, insbesondere aller Flaschenzellen (2), einer bestimmten Transportspur (11) ein Spurwechsel zur Kontrolle von Flaschenzellen (2) einer anderen Transportspur (11) vorgenommen wird.

7. Flaschenreinigungsmaschine (1, 21) mit einer optischen Kontrollvorrichtung für Flaschenzellen, wobei die Kontrollvorrichtung (5, 25) wenigstens eine Kamera (6) zum flaschenmündungsseitigen Abbilden der Flaschenzellen (2) umfasst sowie eine digitale Bildauswerteeinheit (7) zum Vergleich daraus resultierender Bilddaten (BD) mit Referenzdaten (RD) ordnungsgemäßer und/oder leerer Flaschenzellen (2) und zur darauf basierenden Ermittlung wenigstens eines Fehlerzustands (F1 - F3) der Flaschenzellen (2), wobei ferner eine Steuerung (8) zum Unterbinden der weiteren Flaschenzufuhr zu diesbezüglich fehlerhaften Flaschenzellen (2') vorhanden ist, und wobei die Kontrollvorrichtung (5, 25) zur elektronischen Markierung der fehlerhaften Flaschenzellen (2') und/oder jeweils zugehöriger Querträger (3') für die Steuervorrichtung (8) ausgebildet ist.

8. Flaschenreinigungsmaschine nach Anspruche 7, wobei die Bildauswerteeinheit (7) zum Ausführen von Berechnungsschritten gemäß wenigstens einem der Ansprüche 2 bis 4 ausgebildet ist.

9. Flaschenreinigungsmaschine nach Anspruch 7 oder 8, ferner mit einem endlosen Transportmittel (4, 24) für die Flaschenzellen (2), wobei die Kamera (6) im Bereich eines Rücktrums (4a, 24a) des Transportmittels (4, 24) angeordnet ist.

10. Flaschenreinigungsmaschine nach wenigstens einem der Ansprüche 7 bis 9, wobei die Kamera (6) oberhalb oder seitlich der abzubildenden Flaschenzellen (2) angeordnet ist.

11. Flaschenreinigungsmaschine nach wenigstens einem der Ansprüche 7 bis 10, wobei die Kamera (6) an einer Linearführung (9) motorisch über Transportspuren (11) für die Flaschenzellen (6) quer verschiebbar ist.

12. Flaschenreinigungsmaschine nach Anspruch 11, wobei mehrere Kameras (6) vorhanden sind und jeder Kamera (6) vier bis zwölf Transportspuren (11) zugeordnet sind.

13. Flaschenreinigungsmaschine nach wenigstens einem der Ansprüche 11 und 12 wobei die Kontrollvorrichtung (5, 25) ferner konfiguriert ist, Spurwechsel der wenigstens einen Kamera (6) vorzunehmen, insbesondere nach jeweils vollständigem Umlauf des Transportmittels (4).

## Claims

1. Method for controlling bottle cells (2) in a bottle cleaning machine (1, 21), wherein the bottle cells (2) are optically inspected on the bottle mouth side, and wherein the bottle cells (2) are imaged, by digitally comparing the resulting image data (BD) with reference data (RD) of correct and/or empty bottle cells (2), checking for the presence of at least one fault condition (F1 - F3), and thereupon electronically marking bottle cells (2') and/or associated cross members (3') judged to be faulty and removing them from the further bottle feed.

2. Method according to claim 1, wherein a frontal area of the mapped bottle cells (2) is calculated and, in particular for determining a first fault state (F1), compared with a target area (13).

3. Method according to claim 1 or 2, wherein an end-face contour of the imaged bottle cells (2) is calculated and compared with a target contour (14), in particular to determine a second fault state (F2).

4. Method according to claim 1, 2 or 3, wherein a distribution of brightness values in a region (16) of a mouth channel (2d) of the imaged bottle cells (2) is calculated and compared with a target distribution (15), in particular to determine a third fault state (F3).

5. Method according to at least one of the preceding claims, wherein the bottle cells (2) are controlled during ongoing operation of the bottle cleaning machine (1, 21).

6. Method according to at least one of the preceding claims, wherein the bottle cells (2) run through the bottle cleaning machine (1, 21) in parallel-connected transport lanes (11), and wherein after checking a predetermined number of bottle cells (2) and, in particular all bottle cells (2), of a particular transport lane (11), a lane change is carried out for checking bottle cells (2) of another transport lane (11).

7. Bottle cleaning machine (1, 21) with an optical control device for bottle cells, wherein the control device (5, 25) comprises at least one camera (6) for imaging the bottle cells (2) on the bottle mouth side and a digital image evaluation unit (7) for comparing the resulting image data (BD) with reference data (RD) of correct and/or empty bottle cells (2) and for determining at least one fault condition (F1 - F3) of the bottle cells (2) on the basis thereof, wherein furthermore a control device (8) is provided for preventing the further supply of bottles to defective bottle cells (2') in this respect, and wherein the control device (5, 25) is designed for electronically marking the defective bottle cells (2') and/or respectively associated cross members (3') for the control device (8).

8. Bottle cleaning machine according to claim 7, wherein the image evaluation unit (7) is designed to carry out calculation steps according to at least one of claims 2 to 4.

9. Bottle cleaning machine according to claim 7 or 8, further comprising an endless transport means (4, 24) for the bottle cells (2), wherein the camera (6) is arranged in the region of a return strand (4a, 24a) of the transport means (4, 24).

10. Bottle cleaning machine according to at least one of claims 7 to 9, wherein the camera (6) is arranged above or to the side of the bottle cells (2) to be imaged.

11. Bottle cleaning machine according to at least one of claims 7 to 10, wherein the camera (6) is transversely displaceable by motor on a linear guide (9) via transport tracks (11) for the bottle cells (6).

12. Bottle cleaning machine according to claim 11, wherein several cameras (6) are present and four to twelve transport tracks (11) are assigned to each camera (6).

13. Bottle cleaning machine according to at least one of claims 11 and 12, wherein the control device (5, 25) is further configured to perform lane changes of the at least one camera (6), in particular after each complete rotation of the transport means (4).

## Revendications

1. Procédé de contrôle de cellules de bouteilles (2) dans une machine de nettoyage de bouteilles (1, 21), dans lequel les cellules de bouteilles (2) sont inspectées de manière optique du côté de l'embouchure de la bouteille, et dans lequel les cellules de bouteilles (2) sont cartographiées, une vérification de la présence d'au moins un état de défaut (F1 - F3) est mise en œuvre grâce à une comparaison numérique des données d'image (BD) résultantes avec des données de référence (RD) de cellules de bouteilles (2) conformes et/ou vides, et les cellules de bouteilles (2') et/ou les supports transversaux (3') associés jugé(e)s défectueux/ses sont ensuite marqué(e)s de manière électronique et exclu(e)s de l'alimentation ultérieure en bouteilles.

2. Procédé selon la revendication 1, dans lequel une surface frontale des cellules de bouteille (2) cartographiées est calculée et comparée à une surface de consigne (13), en particulier pour déterminer un premier état d'erreur (F1).

3. Procédé selon la revendication 1 ou 2, dans lequel un contour frontal des cellules de bouteille (2) cartographiées est calculé et comparé à un contour de consigne (14), en particulier pour déterminer un deuxième état d'erreur (F2).

4. Procédé selon la revendication 1, 2 ou 3, dans lequel une distribution des valeurs de luminosité dans une région (16) d'un canal d'embouchure (2d) des cellules de bouteille (2) cartographiées est calculée et comparée à une distribution de consigne (15), en particulier pour déterminer un troisième état d'erreur (F3).

5. Procédé selon au moins l'une quelconque des revendications précédentes, dans lequel les cellules de bouteilles (2) sont contrôlées de manière individuelle pendant le fonctionnement de la machine de nettoyage de bouteilles (1, 21).

6. Procédé selon au moins l'une quelconque des revendications précédentes, dans lequel les cellules de bouteilles (2) traversent la machine de nettoyage de bouteilles (1, 21) sur des voies de transport (11) parallèles, et dans lequel, après contrôle d'un nombre prédéterminé de cellules de bouteilles (2), et en particulier de toutes les cellules de bouteilles (2), d'une voie de transport (11) particulière, un changement de voie est mis en œuvre afin de contrôler les cellules de bouteilles (2) d'une autre voie de transport (11).

7. Machine de nettoyage de bouteilles (1, 21) comprenant un dispositif de contrôle optique pour des cellules de bouteilles, dans laquelle le dispositif de contrôle (5, 25) comprend au moins une caméra (6) permettant de cartographier les cellules de bouteilles (2) du côté de l'embouchure de la bouteille et une unité d'évaluation numérique d'image (7) permettant de comparer les données d'image (BD) résultantes avec des données de référence (RD) de cellules de bouteilles (2) conformes et/ou vides et permettant de déterminer au moins un état d'erreur (F1 à F3) des cellules de bouteilles (2) en se basant sur ladite comparaison, dans laquelle une commande (8) permettant d'empêcher l'alimentation ultérieure en bouteilles vers des cellules de bouteilles (2') défectueuses à cet égard est en outre présente, et dans laquelle le dispositif de contrôle (5, 25) est conçu pour marquer de manière électronique les cellules de bouteilles (2') défectueuses et/ou les supports transversaux (3') respectivement associés pour le dispositif de commande (8).

8. Machine de nettoyage de bouteilles selon la revendication 7, dans laquelle l'unité d'évaluation d'image (7) est conçue pour mettre en œuvre des étapes de calcul selon au moins l'une quelconque des revendications 2 à 4.

9. Machine de nettoyage de bouteilles selon la revendication 7 ou 8, comprenant en outre un moyen de transport sans fin (4, 24) pour les cellules de bouteilles (2), dans laquelle la caméra (6) est agencée dans la région d'une section arrière (4a, 24a) du moyen de transport (4, 24).

10. Machine de nettoyage de bouteilles selon au moins l'une quelconque des revendications 7 à 9, dans laquelle la caméra (6) est agencée au-dessus ou sur le côté des cellules de bouteilles (2) à cartographier.

11. Machine de nettoyage de bouteilles selon au moins l'une quelconque des revendications 7 à 10, dans laquelle la caméra (6) peut être déplacée transversalement sur des voies de transport (11) destinées aux cellules de bouteilles (6), de manière motorisée et au niveau d'un guidage linéaire (9).

12. Machine de nettoyage de bouteilles selon la revendication 11, dans laquelle plusieurs caméras (6) sont présentes et quatre à douze voies de transport (11) sont associées à chaque caméra (6).

13. Machine de nettoyage de bouteilles selon au moins l'une quelconque des revendications 11 et 12, dans laquelle le dispositif de contrôle (5, 25) est en outre configuré pour mettre en œuvre un changement de voie de la au moins une caméra (6), en particulier après chaque rotation complète du moyen de transport (4).
